# EUROPÄISCHE PATENTSCHRIFT

(11) **EP 1 272 921 B1**
(45) Veröffentlichungstag und Bekanntmachung des Hinweises auf die Patenterteilung: **01.10.2003**
(21) Anmeldenummer: 01929491.7
(22) Anmeldetag: 02.04.2001
(51) Int. Cl.: G06F 3/033

(54) **VERFAHREN ZUM NAVIGIEREN ZWISCHEN AUSSCHNITTEN IN EINEM DARSTELLUNGSRAUM**
METHOD FOR NAVIGATING BETWEEN WINDOWS IN A DISPLAY AREA
PROCEDE POUR NAVIGUER ENTRE DES FENETRES D'UN ESPACE D'AFFICHAGE

(30) Priorität: 04.04.2000 DE 10016753
(43) Veröffentlichungstag der Anmeldung: 08.01.2003
(73) Patentinhaber: Definiens AG, 80339 München (DE)
(72) Erfinder: ALVERS, Michael, R., 81539 München (DE); SCHMIDT, Günter, 80999 München (DE)
(74) Vertreter: Winter, Brandl, Fürniss, Hübner, Röss, Kaiser, Polte Partnerschaft
(86) Internationale Anmeldenummer: EP0103732
(87) Internationale Veröffentlichungsnummer: WO01075574

(56) Entgegenhaltungen:
- WO-A-97/37294
- DE-A- 3 618 256
- US-A- 5 854 630

## Beschreibung

Die vorliegende Erfindung betrifft ein computerimplementiertes Verfahren zum Navigieren zwischen Ausschnitten in einem Darstellungsraum gemäß dem Oberbegriff des Anspruchs 1.

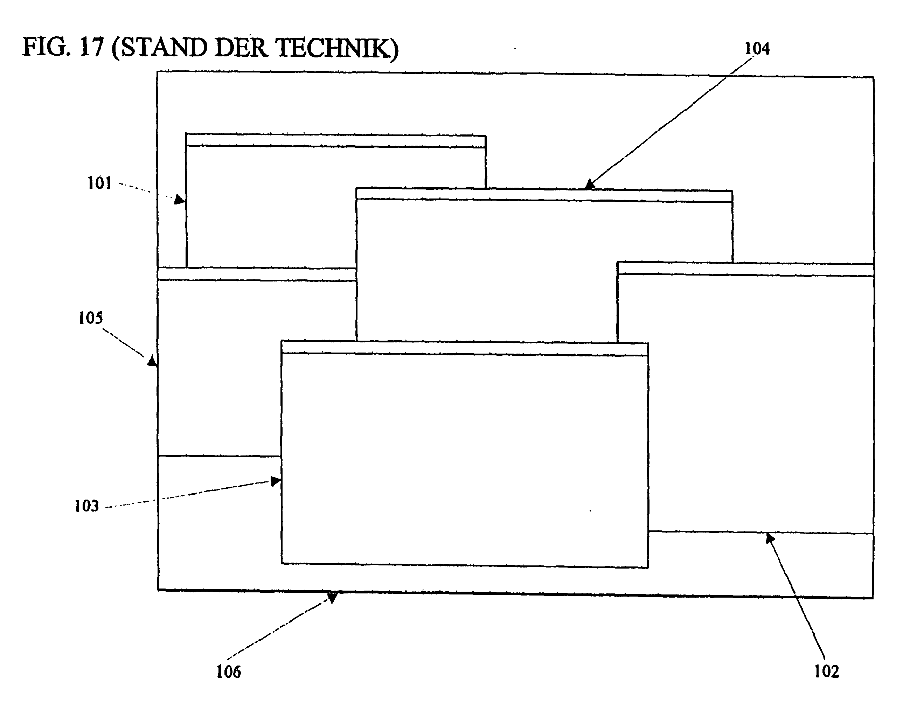

Fig. 17 zeigt ein Verfahren zum Darstellen von Objekten, wie zum Beispiel Fenstern, auf einer Arbeitsfläche. Ein derartiges Verfahren wird zum Beispiel bei dem Betriebssystem Windows der Firma Microsoft dazu verwendet, um mehrere Fenster gleichzeitig auf der Arbeitsfläche darstellen zu können. Wie es in Fig. 17 gezeigt ist, werden auf einer Arbeitsfläche 106 erste bis fünfte Fenster 101 bis 105 dargestellt, welche sich überdecken. Ein derartiges Überdecken der ersten bis fünften Fenster 101 bis 105 kann jedoch dazu führen, daß ein Benutzer verwirrt wird, was insbesondere dann der Fall sein kann, wenn viele Fenster möglicherweise stark überlappend auf der Arbeitsfläche dargestellt werden. Um dieses Problem zu lösen, besteht bei diesem Verfahren die Möglichkeit, die Fenster zu ikonisieren bzw. zu verkleinern oder in den Hintergrund zu bringen. Dies weist jedoch eine lediglich geringe Funktionalität auf.

Um die Probleme bei dem zuvor beschriebenen Verfahren zu lösen, weisen einige Desktop-Umgebungen, wie zum Beispiel die der Firmen HP, Xerox, und SGI oder die Desktop-Umgebungen KDE und GNOME, Möglichkeiten auf, dem Benutzer eines Computers mehrere Desktops bzw. Schreibtische zugänglich zu machen.

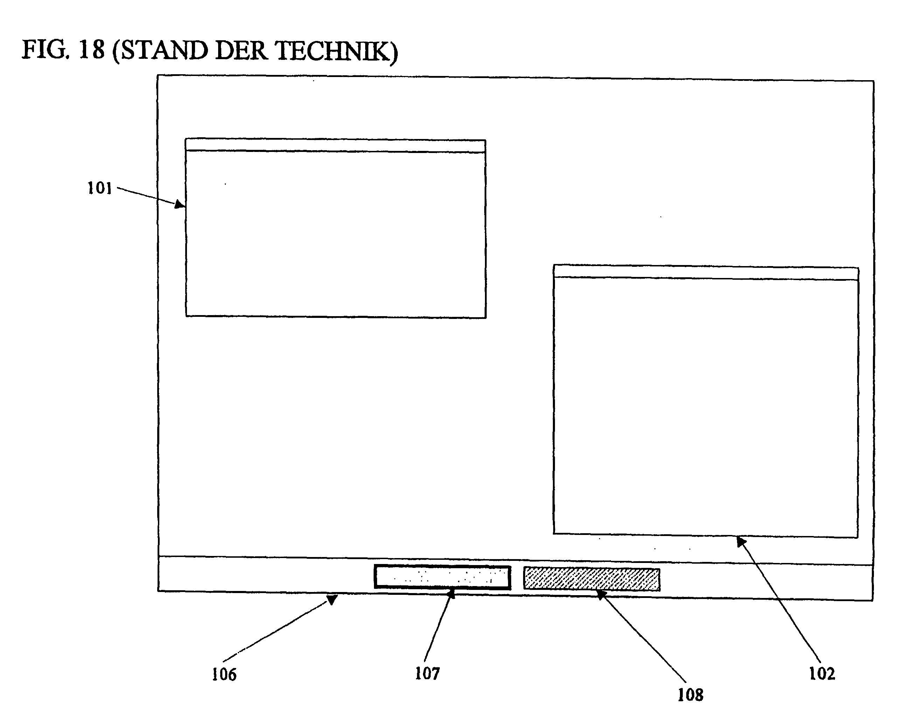

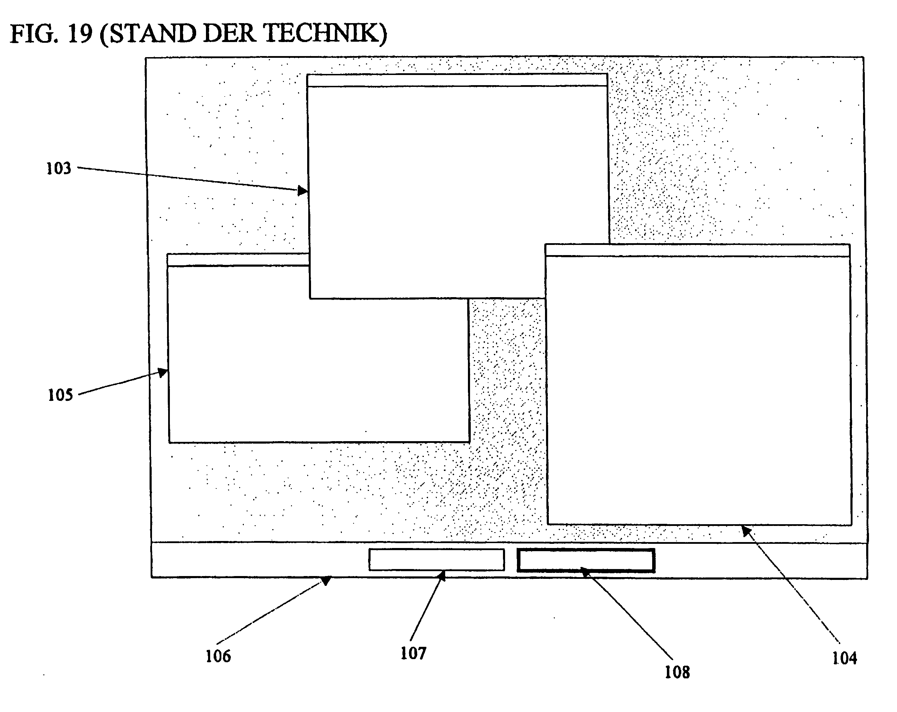

Ein derartiges Verfahren ist in den Figuren 18 und 19 gezeigt. Wie es in Fig. 18 gezeigt ist, weist eine erste Ansicht auf einer Arbeitsfläche 106 ein erstes und ein zweites Fenster 101 bzw. 102 auf, und wie es in Fig. 19 gezeigt ist, weist eine zweite Ansicht dritte bis fünfte Fenster 103 bis 105 auf der Arbeitsfläche 106 auf. Ferner sind erste und zweite Repräsentanten 107 und 108 auf der Arbeitsfläche 106 vorgesehen, welche dazu dienen, eine Navigation von der ersten Ansicht zu der zweiten Ansicht und umgekehrt durchführen zu können. Diese ersten und zweiten Repräsentanten 107 bzw. 108 können mittels virtueller und/oder real existierender Bedienelemente vorgesehen werden.

Der Vorteil eines derartigen Verfahrens besteht darin, daß durch Ausführen einer Aktion mittels einer geeigneten Eingabevorrichtung, wie zum Beispiel einer Computermaus, zwischen verschiedenen Ansichten gewechselt werden kann, die zuvor angelegt worden sind. Dadurch wird ein übersichtlicheres Arbeiten erreicht, da je Ansicht eine geringere Anzahl von Fenstern dargestellt wird. Zum Beispiel könnten sich in der ersten Ansicht, die in Fig. 18 gezeigt ist, das erste und das zweite Fenster 101 bzw. 102 auf Textverarbeitung beziehen und könnten sich in der zweiten Ansicht, die in Fig. 19 gezeigt ist, die dritten bis fünften Fenster 103 bis 105 auf Bildbearbeitung beziehen. In diesem Fall könnte der erste Repräsentant 107 den Namen "Text" aufweisen und könnte der zweite Repräsentant den Namen "Bilder" aufweisen. Das heißt, daß jeweilige Ansichten jeweilige Fenster thematisch ordnen können. Bei vielen Systemen besteht die Möglichkeit, die Namen der Repräsentanten benutzerdefiniert zu ändern. Ferner kann die graphische Gestaltung der Repräsentanten die gegebenenfalls verschiedenen graphischen Eigenschaften, wie zum Beispiel Form, Farbe usw., einer jeweiligen Ansicht widerspiegeln und/oder ikonenhaft den Inhalt der jeweiligen Ansicht wiedergeben, was zum Beispiel bei dem System der Firma Xerox der Fall ist.

Ein weiterer Vorteil dieses Verfahrens besteht darin, daß nicht viele Fenster unübersichtlich in einer einzigen Ansicht, möglicherweise stark überlappend, dargestellt werden, die, damit der Benutzer überhaupt etwas erkennen kann, gegebenenfalls ikonisiert bzw. verkleinert oder in den Hintergrund gebracht werden müssen. Vielmehr weist jede Ansicht eine kleinere Anzahl von Fenstern auf.

Ein wesentlicher Nachteil des zuvor beschriebenen Verfahrens besteht darin, das beim Wechseln von einer Ansicht zu einer anderen Ansicht ein plötzlicher Übergang erfolgt. Ein derartiger plötzlicher Übergang entspricht jedoch nicht der Denkweise eines Benutzers, da es im nicht-virtuellen Leben keine plötzlichen Übergänge gibt.

Aus der DE-A-36 18 256 ist ein Verfahren gemäß dem Oberbegriff des Anspruchs 1 bekannt.

Es ist demgemäß die Aufgabe der vorliegenden Erfindung, ein Verfahren zum Navigieren zwischen Ausschnitten in einem Darstellungsraum zu schaffen, das einen kontinuierlichen Übergang zwischen Ansichten ermöglicht.

Diese Aufgabe wird mit den in Anspruch 1 angegebenen Maßnahmen gelöst.

Gemäß dem Gegenstand des Anspruchs 1 wird durch die Verwendung des eindeutigen Bezugs eines Repräsentanten zu einem bestimmten Ausschnitt in dem Darstellungsraum und die Zuordnung der Ausschnitte zu jeweils einem bestimmten Ort des Darstellungsraums der Vorteil erzielt, daß ein Navigieren zwischen Ausschnitten in dem Darstellungsraum auf eine kontinuierliche Weise durchgeführt werden kann.

Zum Beispiel kann eine Überblendung von einem Ausschnitt zu einem anderen Ausschnitt durch ein Betätigen, wie zum Beispiel ein Anklicken, eines Repräsentanten ausgelöst werden und erfolgt dann eine Kameraführung, wie zum Beispiel ein Verkleinern, Vergrößern und/oder Verschieben, auf eine geeignete Weise. Die Kameraführung kann zum Beispiel von einem Ausschnitt zurückfahren, bis dieser und ein anderer Ausschnitt, zu dem zu navigieren ist, dargestellt werden. Im Anschluß daran wird zu dem Ausschnitt hingefahren, zu dem zu navigieren ist.

weitere vorteilhafte Weiterbildungen der vorliegenden Erfindung sind Gegenstand der abhängigen Ansprüche.

Die vorliegende Erfindung wird nachstehend anhand eines Ausführungsbeispiels unter Bezugnahme auf die beiliegende Zeichnung näher erläutert.

Es zeigen:
- Fig. 1 bis 16: graphische Darstellungen beispielhafter Verfahrensschritte bei einem Verfahren gemäß einem Ausführungsbeispiel der vorliegenden Erfindung;
- Fig. 17: eine graphische Darstellung eines Verfahrens im Stand der Technik; und
- Fig. 18 und 19: graphische Darstellungen eines weiteren Verfahrens im Stand der Technik.

Nachstehend erfolgt die Beschreibung des Ausführungsbeispiels der vorliegenden Erfindung.

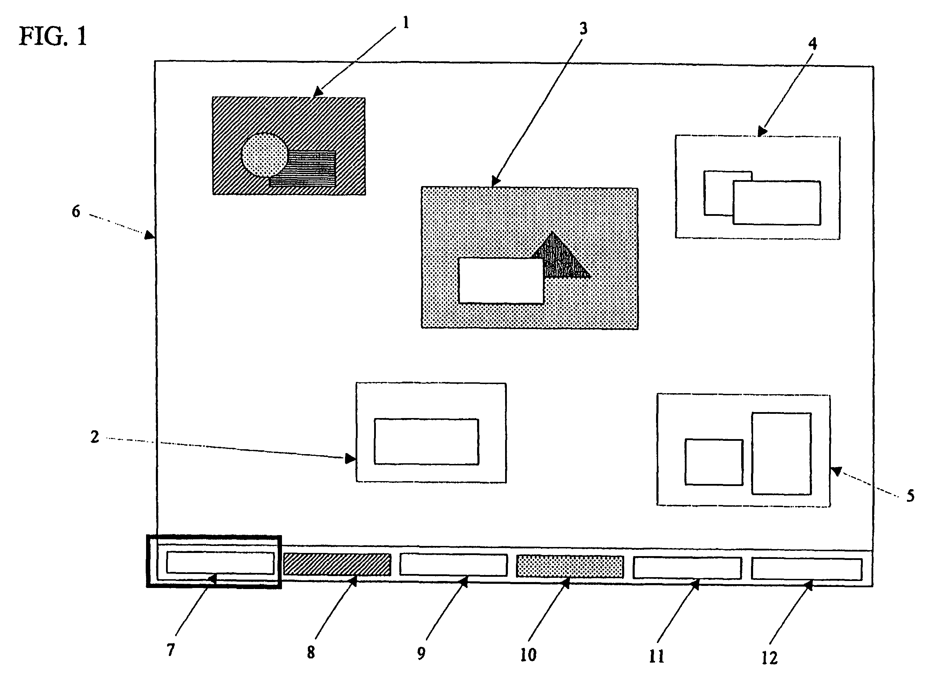

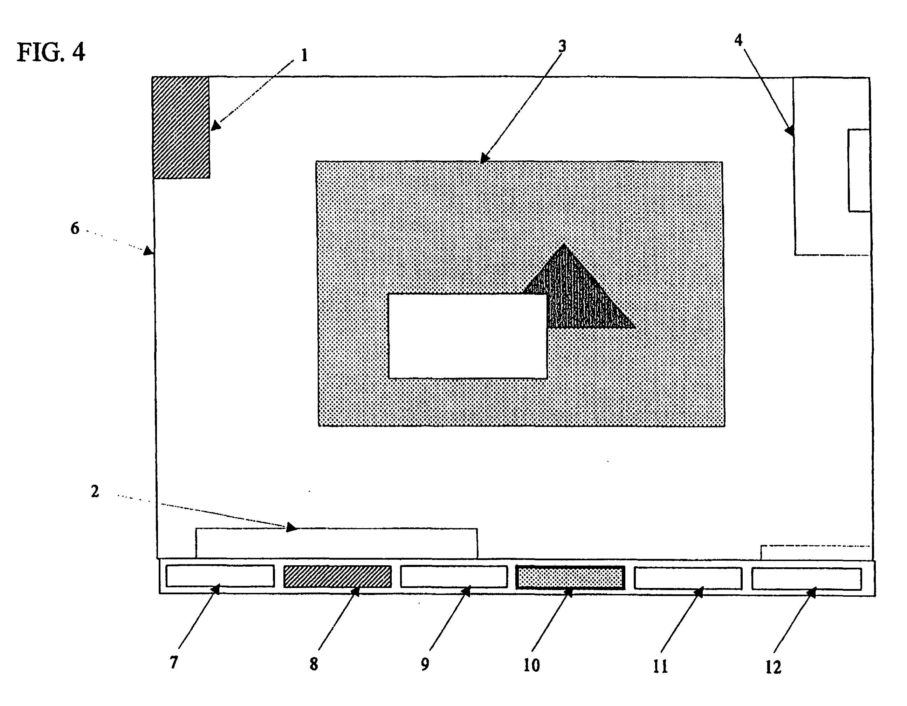

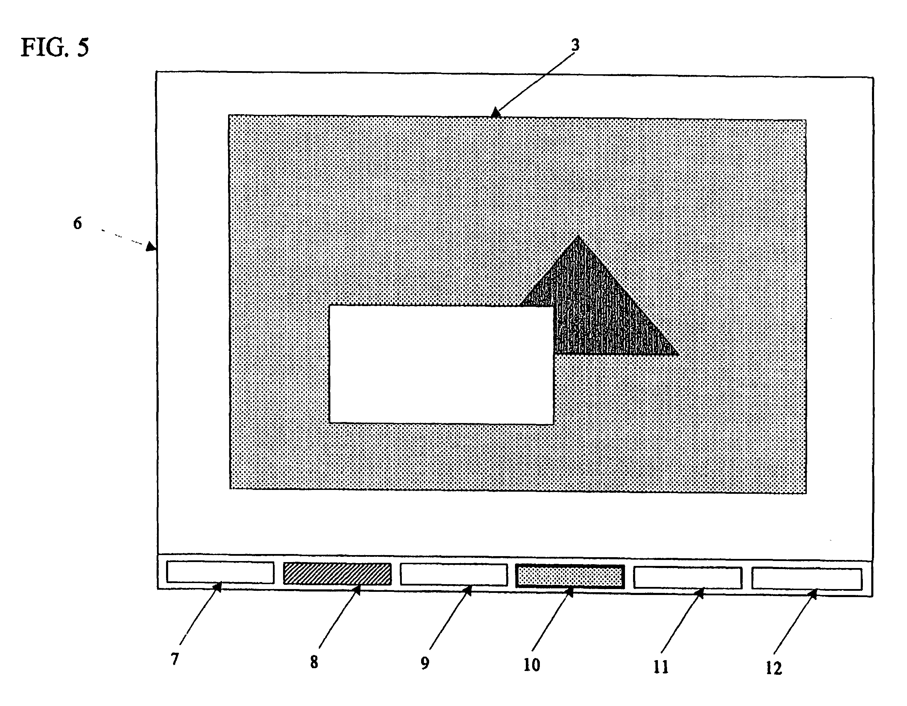

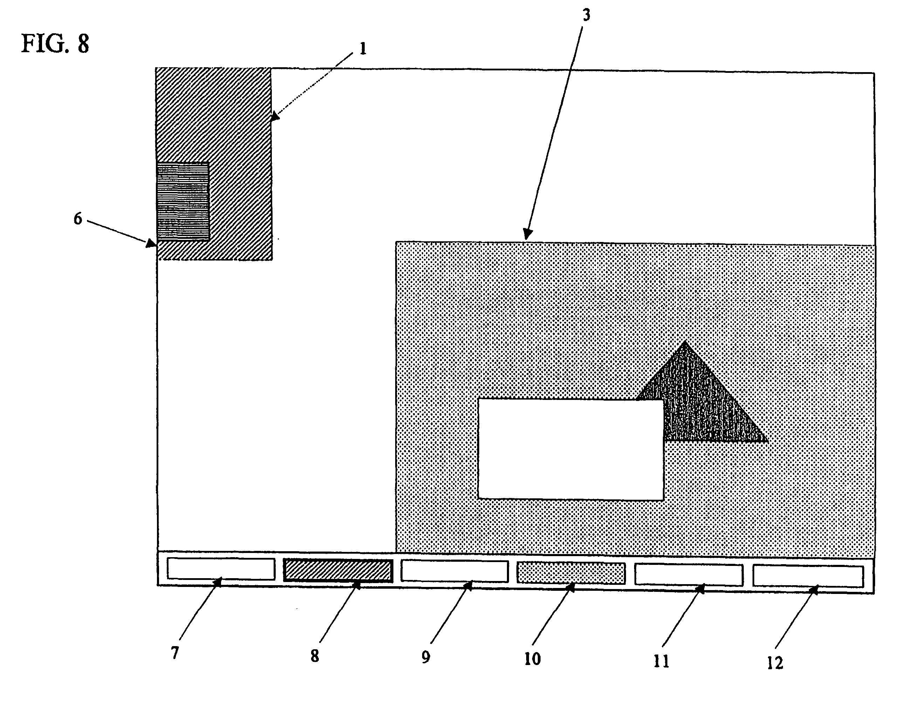

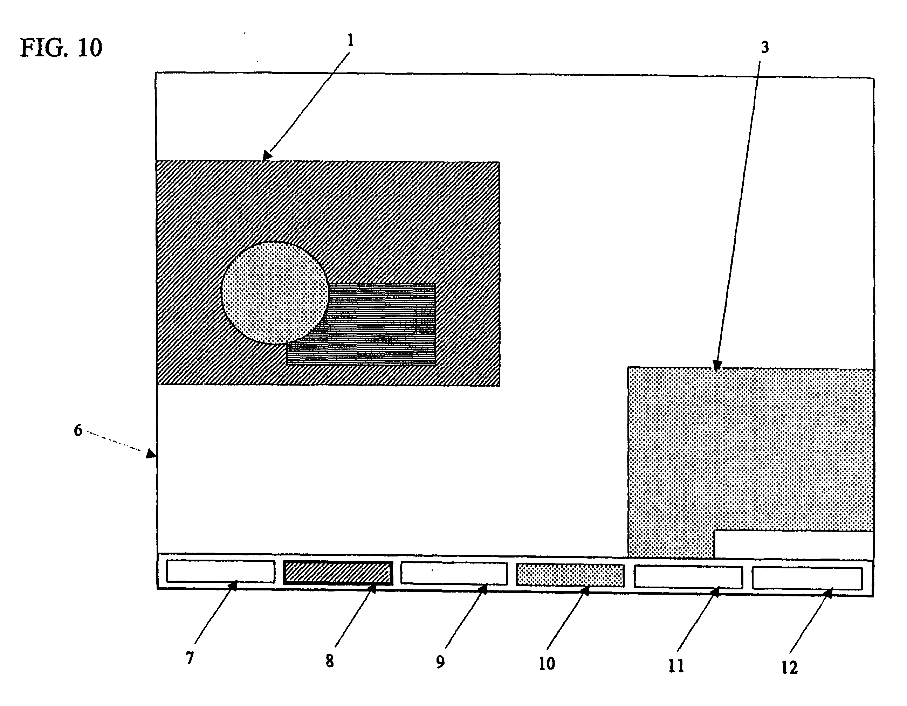

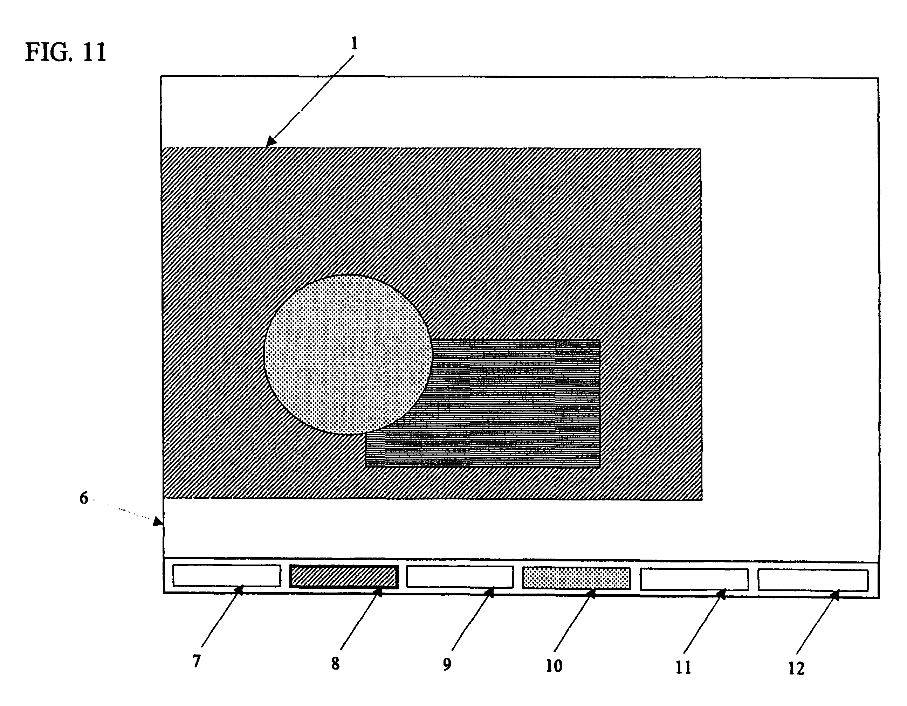

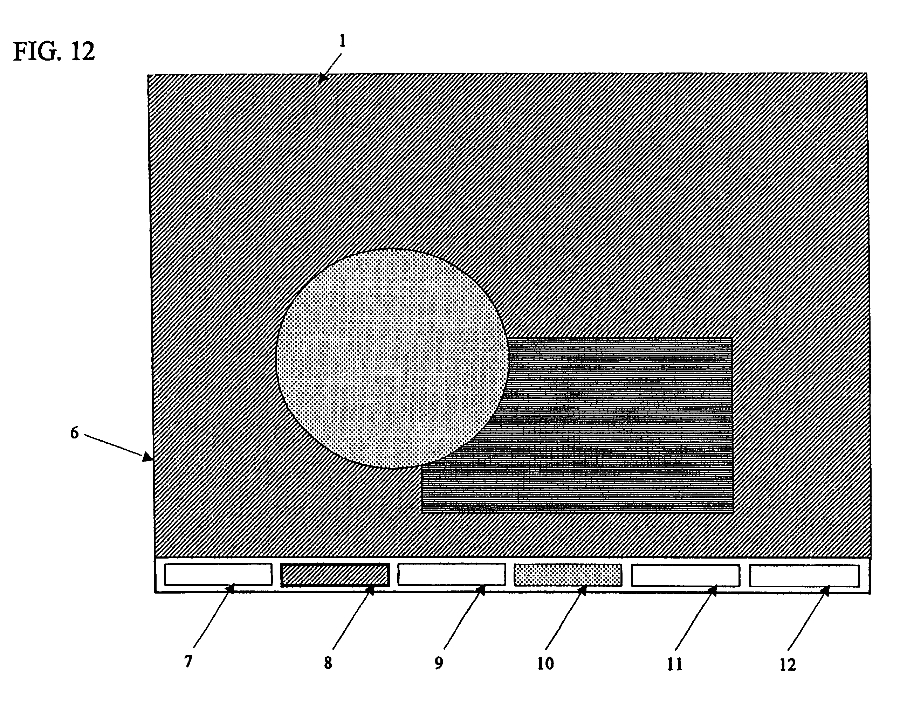

Die Figuren 1 bis 16 zeigen graphische Darstellungen beispielhafter Verfahrensschritte bei einem Verfahren gemäß dem Ausführungsbeispiel der vorliegenden Erfindung.

In den Figuren 1 bis 16 bezeichnen die Bezugszeichen 1 bis 5 erste bis fünfte Ansichten, bezeichnet das Bezugszeichen 6 eine Arbeitsfläche und bezeichnen die Bezugszeichen 7 bis 12 erste bis sechste Repräsentanten.

Die Arbeitsfläche 6 dient dazu, jeweilige Ausschnitte in einem Darstellungsraum, die eine oder mehrere Ansichten enthalten, darzustellen. Der Darstellungsraum ist vorzugsweise unendlich groß und weist an bestimmten Orten jeweils bestimmte Ansichten auf. Die Repräsentanten 7 bis 12 sind virtuelle und/oder real existierende Bedienelemente und können Namen aufweisen und/oder mit Bildern assoziiert sein. Wesentlich ist, daß jedem Repräsentanten 7 bis 12 mittels eines eindeutigen Bezugs zu einem bestimmten Ausschnitt in dem Darstellungsraum dieser bestimmte Ausschnitt, das heißt, eine bestimmte oder mehrere bestimmte der Ansichten 1 bis 5, zugewiesen ist, und jeder Ausschnitt in dem Darstellungsraum einem bestimmten Ort in dem Darstellungsraum zugewiesen ist. Demgemäß ist also innerhalb des Darstellungsraums ein örtlicher Bezug jedes Ausschnitts gegeben. Durch diesen örtlichen Bezug kann mittels der Repräsentanten 7 bis 12 eine kontinuierliche Navigation innerhalb des Darstellungsraums durchgeführt werden, wie es nachstehend anhand von Beispielen beschrieben wird.

Der erste Repräsentant 7 ist dazu vorgesehen, einen Ausschnitt in dem Darstellungsraum darzustellen, bei dem alle der ersten bis fünften Ansichten 1 bis 5 auf der Arbeitsfläche 6 dargestellt werden. Die zweiten bis sechsten Repräsentanten sind demgegenüber dazu vorgesehen, jeweils die erste bis fünfte Ansicht 1 bis 5 alleine auf der Arbeitsfläche 6 darzustellen.

Wie es in Fig. 1 gezeigt ist, wird von dem Fall ausgegangen, daß zu Beginn einer Navigation der erste Repräsentant 7 ausgewählt ist, wie es durch den Rahmen um den ersten Repräsentanten 7 kenntlich gemacht ist. Das heißt, daß auf der Arbeitsfläche 6 alle der ersten bis fünften Ansichten 1 bis 5 dargestellt werden.

Es ist anzumerken, daß der Inhalt der ersten bis fünften Ansichten als beliebige geometrische Formen dargestellt ist, um anzudeuten, daß verschiedenste Objekte, wie zum Beispiel Fenster, in den Ansichten enthalten sein können. Für die Verwendung der Repräsentanten ist es weitestgehend unnötig, welche Objekte bzw. Inhalte in den Ansichten enthalten sind.

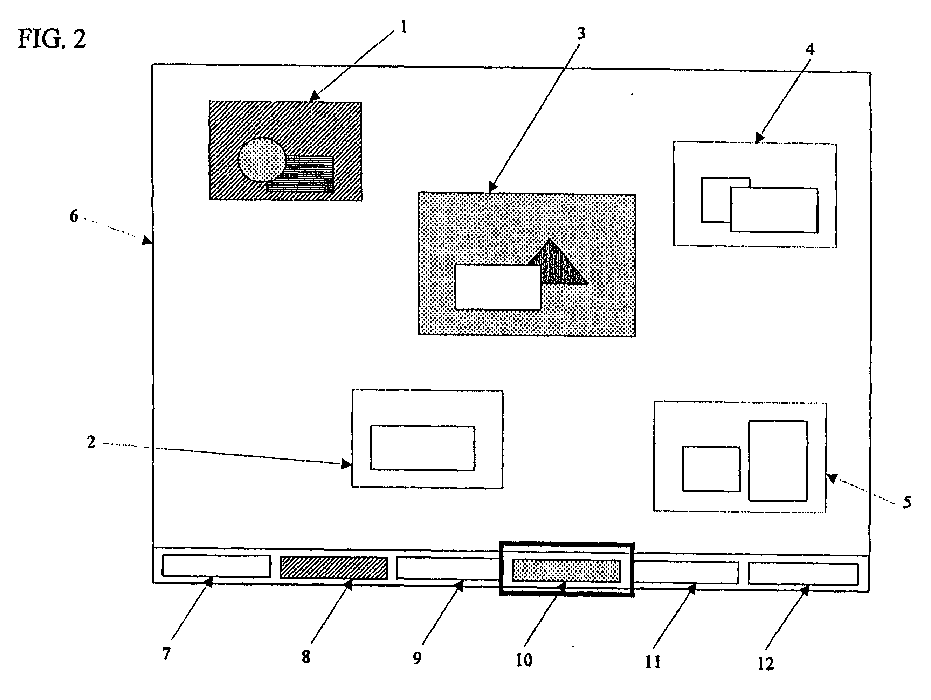

Wenn nunmehr, wie es in Fig. 2 mittels des Rahmens um den vierten Repräsentanten 10 angedeutet ist, von Darstellung aller der ersten bis fünften Ansichten 1 bis 5 zu der alleinigen Darstellung der dritten Ansicht 3 navigiert werden soll, wird der vierte Repräsentant 10 zum Beispiel mittels einer geeigneten Eingabevorrichtung betätigt. Dies kann zum Beispiel durch Anklicken des vierten Repräsentanten 10 mit einer Computermaus durchgeführt werden, wenn die Repräsentanten 7 bis 12 virtuelle Bedienelemente auf der Arbeitsfläche 6 sind.

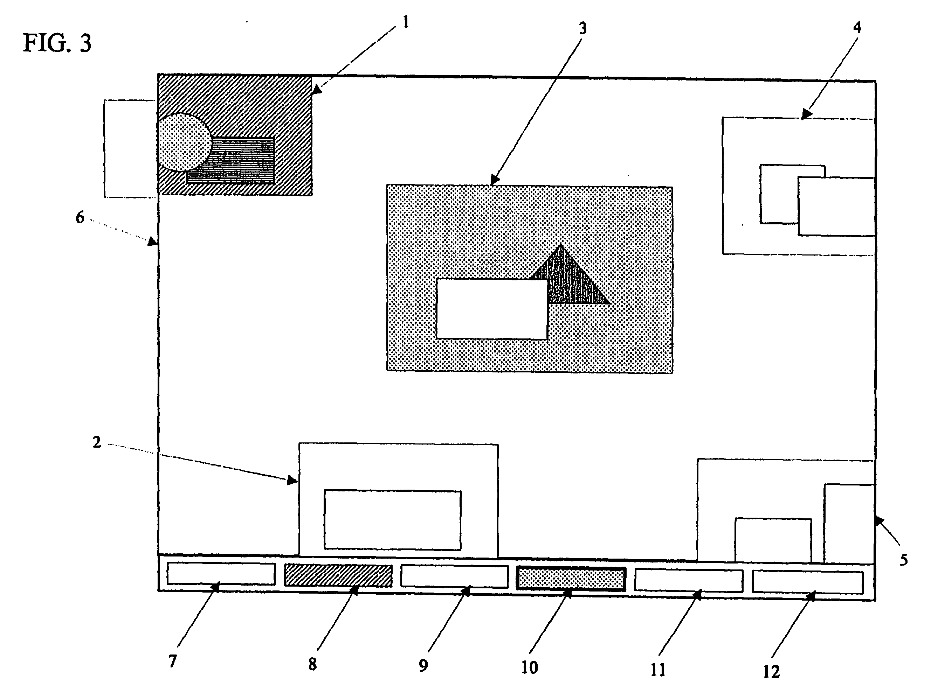

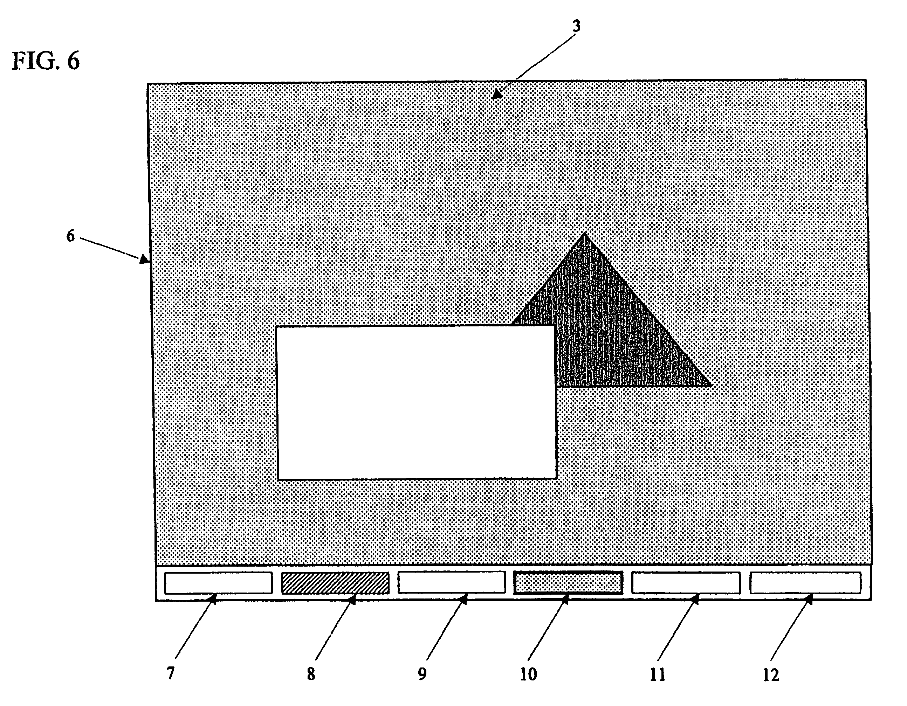

Wie es in den Figuren 3 bis 6 gezeigt ist, erfolgt nunmehr eine derartige Kameraführung, daß die dritte Ansicht 3 nach und nach größer wird und die erste, zweite, vierte und fünfte Ansicht 1, 2, 4 bzw. 5 nach und nach kleiner werden und langsam die Arbeitsfläche verlassen, bis letztendlich die dritte Ansicht 3 die gesamte Arbeitsfläche füllt. Somit ist dieser Navigationsschritt beendet, wenn der in Fig. 6 gezeigte Zustand erreicht ist. Diese Navigation wird durch den eindeutigen Bezug ermöglicht, den die Repräsentanten 7 bis 12 zu jeweiligen Ausschnitten in dem Darstellungsraum aufweisen.

In einem nächsten Navigationsschritt soll nun von der dritten Ansicht 3 zu der ersten Ansicht 1 navigiert werden. Dies wird durch Betätigen des zweiten Repräsentanten 8 eingeleitet, der den eindeutigen Bezug zu dem Ausschnitt in dem Darstellungsraum aufweist, in dem die erste Ansicht 1 vorhanden ist.

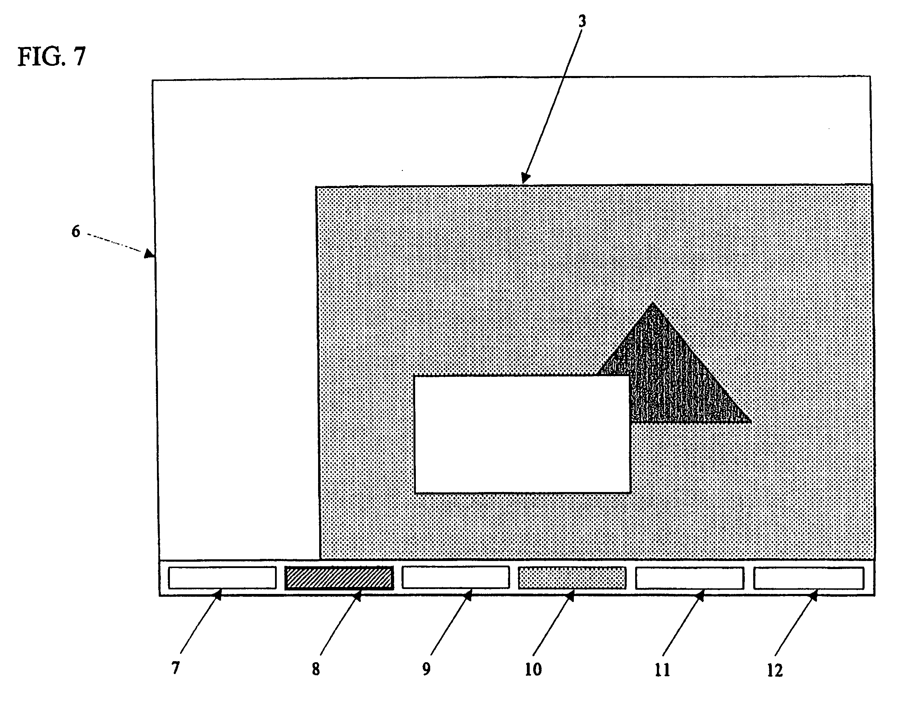

Wie es in den Figuren 7 bis 12 gezeigt ist, findet die Kameraführung bei diesem Navigationsschritt derart statt, daß die dritte Ansicht 3 solange verkleinert wird, bis die erste Ansicht 1 und die dritte Ansicht 3 beide in der Arbeitsfläche 6 sichtbar sind. Anschließend wird die erste Ansicht 1 vergrößert und verläßt die dritte Ansicht 3 die Arbeitsfläche 6. Dies wird wieder solange durchgeführt, bis die erste Ansicht 1 auf der gesamten Arbeitsfläche 6 dargestellt wird und somit dieser Navigationsschritt beendet ist.

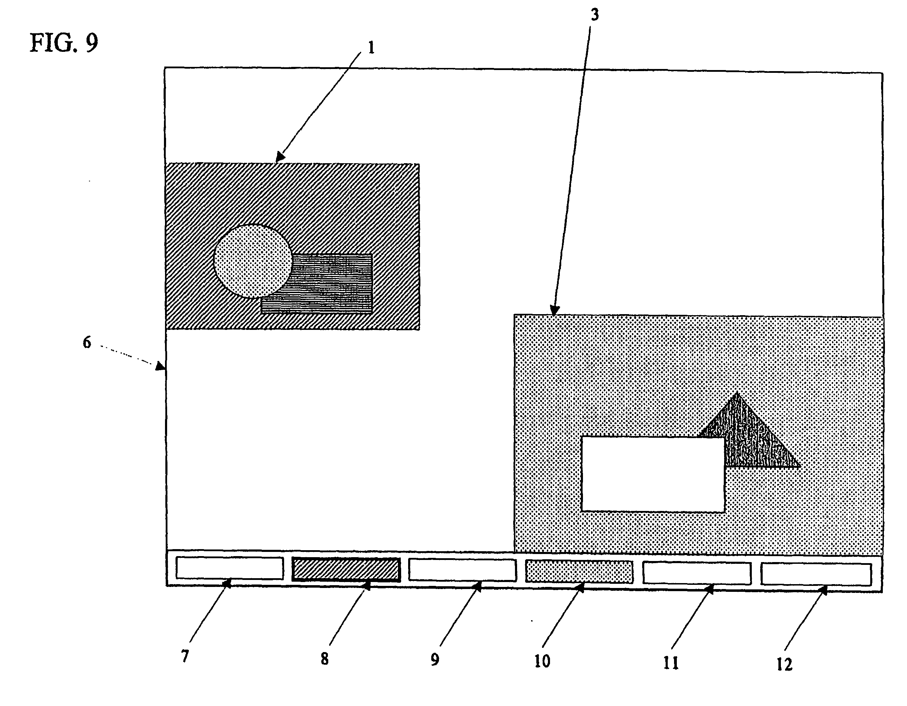

Die zuvor beschriebene Kameraführung stellt lediglich eine Möglichkeit der Kameraführung dar. Zum Beispiel kann bei einem Wechseln von einer Ansicht zu einer anderen Ansicht, nicht, wie es in Fig. 9 gezeigt ist, solange verkleinert werden, bis die Ansicht, von der aus navigiert wird, und die Ansicht, zu der zu navigieren ist, auf der Arbeitsfläche 6 dargestellt werden, sondern kann solange verkleinert werden, bis alle in dem Darstellungsraum vorhandenen Ansichten auf der Arbeitsfläche 6 dargestellt werden. Eine derartige Kameraführung weist den Vorteil auf, daß ein Benutzer nach kurzer Einarbeitung ein Gefühl dafür bekommt, wo sich welche Ansichten in einem Gesamtkontext befinden.

Weiterhin kann eine Einfärbung und/oder Musterung eines Hintergrunds entsprechend einer dargestellten Ansicht und/oder eine graphische Gestaltung der Repräsentanten, die die gegebenenfalls verschiedenen graphischen Eigenschaften, wie zum Beispiel Form und Farbe, der jeweiligen Ansicht widerspiegeln und/oder ikonenhaft den Inhalt der jeweiligen Ansicht wiedergeben, vorgesehen werden.

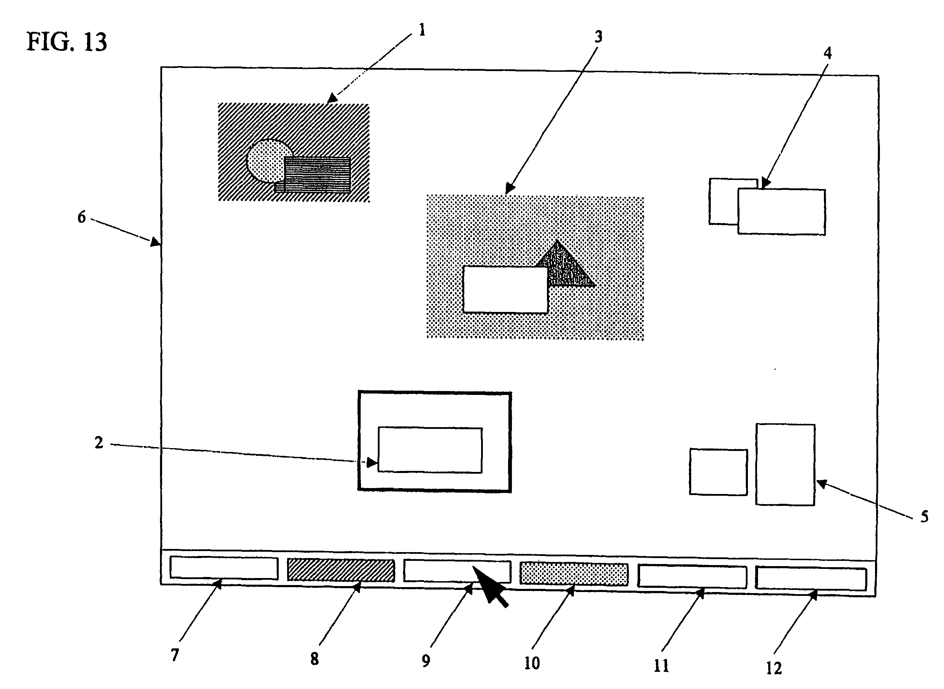

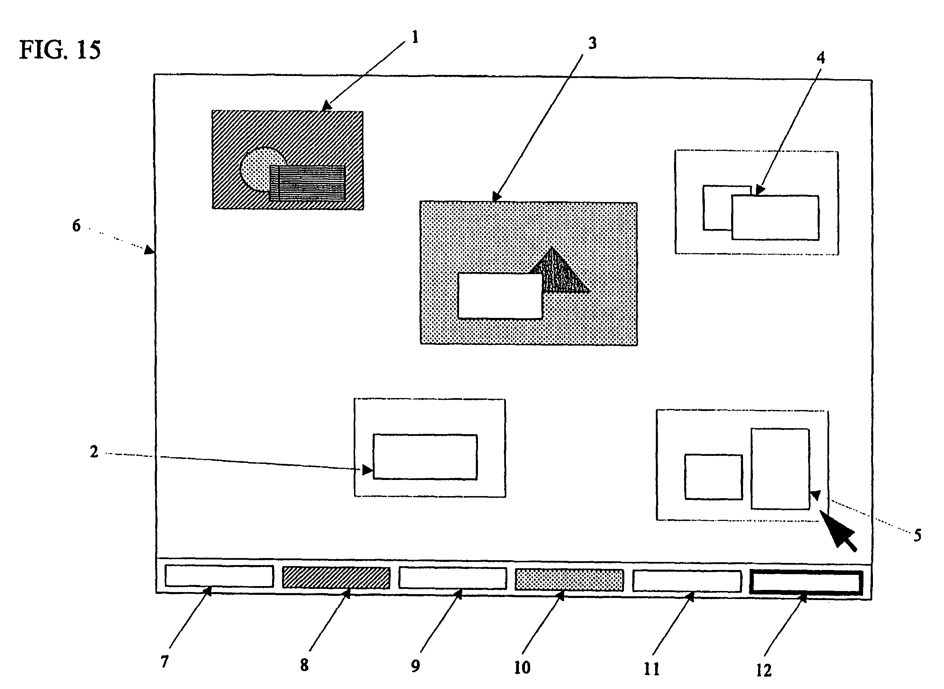

Wie es in den Figuren 13 und 15 gezeigt ist, besteht weiterhin ebenso die Möglichkeit, eine semantische bzw. eine eine Bedeutung tragende Rückkopplung zum Beispiel beim Berühren eines Repräsentanten oder einer Ansicht vorzusehen.

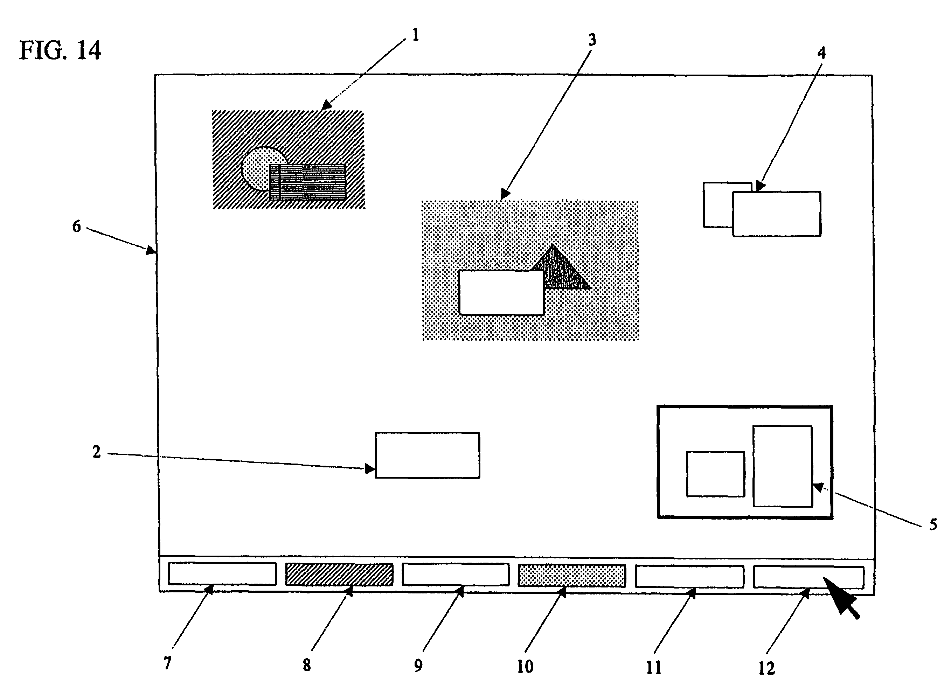

Zum Beispiel kann, wie es in den Figuren 13 und 14 gezeigt ist, in dem Fall, in dem eine geeignete Eingabevorrichtung einen Repräsentanten berührt, diese zu diesem Repräsentanten zugehörige Ansicht hervorgehoben werden. In Fig. 13 wird die zweite Ansicht 2 mit einem Rahmen versehen, da der zu der zweiten Ansicht 2 dazugehörige dritte Repräsentant 9 berührt wird, wie es durch den Pfeil in Fig. 13 angedeutet ist. In Fig. 14 wird die fünfte Ansicht 5 mit einem Rahmen versehen, da der zu der fünften Ansicht 5 zugehörige sechste Repräsentant 12 berührt wird, wie es durch den Pfeil in Fig. 14 angedeutet ist.

Wie es in Fig. 15 gezeigt ist, besteht ebenso die Möglichkeit, daß, wenn in der Arbeitsfläche ein Bereich berührt wird, der einen Repräsentanten aufweist, der zu diesem Bereich zugehörige Repräsentant hervorgehoben werden. In Fig. 15 berührt zum Beispiel ein Pfeil die fünfte Ansicht 5 und wird demgemäß der sechste Repräsentant 12 hervorgehoben, wie es durch den starken Rahmen um den sechsten Repräsentanten 12 angedeutet ist. Wird nunmehr der Bereich zum Beispiel durch einen Mausklick, ausgewählt, kann zu diesem Bereich vergrößert werden, wie es unter Bezugnahme auf die Figuren 1 bis 12 zuvor beschrieben worden ist.

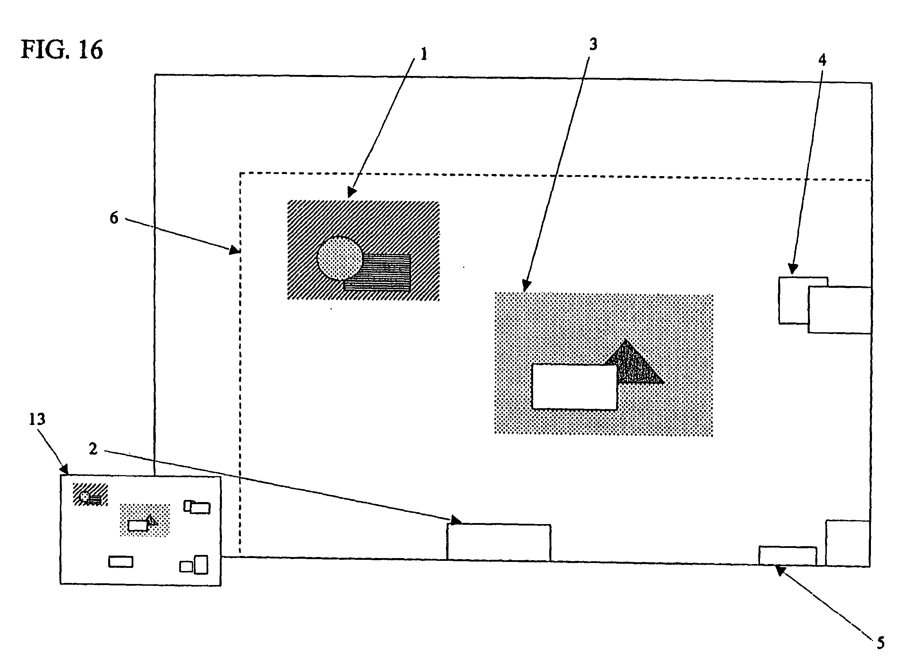

Die Darstellung der Repräsentanten ist nicht auf die zuvor beschriebene Form von virtuellen Tasten beschränkt. Vielmehr können die Repräsentanten ebenso durch ein in Form und/oder Größe verändertes Abbild des Darstellungsraums dargestellt werden, wie dies in Fig. 16 mit dem Bezugszeichen 13 gezeigt ist. Durch Betätigen jeweiliger Abbilder der Ansichten in dem verkleinerten Darstellungsraum mit einer geeigneten Eingabevorrichtung wird die zuvor unter Bezugnahme auf die Figuren 1 bis 12 beschriebene Navigation durchgeführt.

Obgleich in dem zuvor beschriebenen Ausführungsbeispiel lediglich ein Repräsentant zu einem jeweiligen Zeitpunkt ausgewählt wird, besteht ebenso die Möglichkeit, daß mehrere Repräsentanten gleichzeitig ausgewählt wird und dann eine Navigation zu allen ausgewählten Repräsentanten auf die vorhergehend beschriebene Weise derart durchgeführt wird, daß letztendlich der Bereich auf der Arbeitsfläche dargestellt wird, in dem sich die zu diesen Repräsentanten zugehörigen Ansichten befinden.

Ferner können auch Repräsentanten vorhanden sein, die mehreren Ansichten zugehörig sind. In diesem Fall wird derart navigiert, daß letztendlich der Bereich auf der Arbeitsfläche dargestellt wird, in dem sich die zu diesem Repräsentanten zugehörigen Ansichten befinden.

Jeweilige Repräsentanten, die Zugehörigkeit von diesen zu bestimmten Ansichten und/oder die Inhalte der Ansichten können von einem Benutzer geändert, neu erstellt und/oder gelöscht werden.

Ein wesentlicher Vorteil des zuvor beschriebenen Verfahrens besteht darin, daß eine Verschmelzung verschiedener Desktops mit beliebigen anderen Desktops und/oder Intranetzen und/oder Internetzen möglich ist.

Ferner kann mit dem zuvor beschriebenen Verfahren das Navigieren als eine kontinuierliche Überblendung von einem Ausschnitt zu einem anderen Ausschnitt durchgeführt werden.

Die Repräsentanten können zum Beispiel Elemente eines fraktal-hierarchischen Netzes n-ter Art sein, das übergeordnete und untergeordnete Objekte aufweist.

Ferner können in den Ausschnitten dargestellte Objekte gespeichert werden. Dann besteht ebenso wieder die Möglichkeit, daß die in den Ausschnitten dargestellten Objekte Elemente eines fraktal-hierarchischen Netzes n-ter Art sind.

Wie es aus der vorhergehenden Beschreibung ersichtlich ist, können die Repräsentanten in Form, Farbe und/oder Textur verschieden sein und den Inhalt des ihnen jeweils zugewiesenen Ausschnitts in dem Darstellungsraum widerspiegeln.

In dem zuvor beschriebenen Verfahren kann das Navigieren sowohl durch eine Benutzer-Interaktion als auch automatisch ausgelöst werden. Das automatische Auslösen kann dabei aus berechneten Größen abgeleitet werden.

Vorzugsweise ist der Darstellungsraum unendlich groß und er kann ferner eine beliebige Dimension aufweisen. Ebenso ist es bevorzugt, daß der Darstellungsraum geschlossen ist. Eine bevorzugte Form in dem Darstellungsraum ist ein Ellipsoid oder eine Kugel.

Wenn das zuvor beschriebene Verfahren an einem Netz, wie zum Beispiel einem semantischen Netz verwendet wird, kann das Navigieren zum Beispiel durch eine Anfrage, wie zum Beispiel eine Suchanfrage, ausgelöst werden. Ein derartiges Netz kann zum Beispiel auch das World-Wide-Web sein.

Allgemein ausgedrückt kann die zuvor beschriebene Kameraführung auf einer beliebigen Trajektorie von einem Ausschnitt zu einem anderen Ausschnitt durchgeführt werden. Dabei kann eine Richtung der Kamera an jedem Punkt der Trajektorie frei gewählt werden. Auch eine Verweildauer an einem beliebigen Punkt der Trajektorie ist frei wählbar.

Ferner kann auch eine Historie des Navigierens zum Zweck eines Zurück- und Vorwärtsnavigierens verwendet werden.

Bezüglich weiterer Merkmale und Vorteile der vorliegenden Erfindung wird ausdrücklich auf die Offenbarung der Zeichnung verwiesen.

## Patentansprüche

1. Computerimplementiertes Verfahren zum Navigieren zwischen Ausschnitten (1 bis 5) in einem Darstellungsraum, wobei Repräsentanten (7 bis 12) vorgesehen sind, die mittels eines eindeutigen Bezugs jeweils einem bestimmten Ausschnitt (1 bis 5) in dem Darstellungsraum zugewiesen sind, wobei das Verfahren die folgenden Schritte aufweist:
Auswählen von mindestens einem Repräsentanten (7 bis 12), der mittels des eindeutigen Bezugs einem bestimmten Ausschnitt (1 bis 5) in dem Darstellungsraum zugewiesen ist; und
Navigieren zu dem bestimmten Ausschnitt (1 bis 5) in dem Darstellungsraum mittels des eindeutigen Bezugs zu dem bestimmten Ausschnitt (1 bis 5) in dem Darstellungsraum,
***dadurch gekennzeichnet, daß**:*
die Ausschnitte (1 bis 5) in dem Darstellungsraum jeweils einem bestimmten Ort des Darstellungsraums zugewiesen sind und eine eine Bedeutung tragende Rückkopplung zwischen einem Repräsentanten (7 bis 12) und dem ihm zugewiesenen Ausschnitt (1 bis 5) in dem Darsttellungsraum beim Berühren des Repräsentanten (7 bis 12) oder des ihm zugewiesenen Ausschnitts (1 bis 5) vorgesehen ist.

2. Verfahren nach Anspruch 1, ***dadurch gekennzeichnet, daß*** das Navigieren als eine kontinuierliche Überblendung von einem Ausschnitt (1 bis 5) zu einem anderen Ausschnitt (1 bis 5) durchgeführt wird.

3. Verfahren nach Anspruch 1 oder 2, ***dadurch gekennzeichnet, daß*** die Repräsentanten (7 bis 12) Namen aufweisen.

4. Verfahren nach einem der vorhergehenden Ansprüche, ***dadurch gekennzeichnet, daß*** die Repräsentanten (7 bis 12) mit Bildern assoziierbar sind.

5. Verfahren nach einem der vorhergehenden Ansprüche, ***dadurch gekennzeichnet, daß*** die Repräsentanten (7 bis 12) Elemente eines fraktal-hierarchischen Netzes n-ter Art sind.

6. Verfahren nach einem der vorhergehenden Ansprüche, ***dadurch gekennzeichnet, daß*** in den Ausschnitten (1 bis 5) dargestellte Objekte gespeichert werden.

7. Verfahren nach Anspruch 6, ***dadurch gekennzeichnet, daß*** die in den Ausschnitten (1 bis 5) dargestellten Objekte Elemente eines fraktal-hierarchischen Netzes n-ter Art sind.

8. Verfahren nach einem der vorhergehenden Ansprüche, ***dadurch gekennzeichnet, daß*** die Repräsentanten (7 bis 12) in Form, Farbe und/oder Textur verschieden sind und den Inhalt des ihnen jeweils zugewiesenen Ausschnitts (1 bis 5) widerspiegeln.

9. Verfahren nach einem der vorhergehenden Ansprüche, ***dadurch gekennzeichnet, daß*** das Navigieren durch eine Benutzer-Interaktion und/oder automatisch ausgelöst wird, wobei das automatische Auslösen aus berechneten Größen ableitbar ist.

10. Verfahren nach einem der vorhergehenden Ansprüche, ***dadurch gekennzeichnet, daß*** der Darstellungsraum unendlich groß ist.

11. Verfahren nach einem der vorhergehenden Ansprüche, ***dadurch gekennzeichnet, daß*** der Darstellungsraum eine beliebige Dimension aufweist.

12. Verfahren nach einem der vorhergehenden Ansprüche, ***dadurch gekennzeichnet, daß*** der Darstellungsraum geschlossen ist.

13. Verfahren nach Anspruch 12, ***dadurch gekennzeichnet, daß*** der Darstellungsraum ein Ellipsoid oder eine Kugel ist.

14. Verfahren nach einem der vorhergehenden Ansprüche, ***dadurch gekennzeichnet, daß*** das Navigieren durch eine Anfrage auf einem Netz ausgelöst wird.

15. Verfahren nach einem der vorhergehenden Ansprüche, ***dadurch gekennzeichnet, daß*** der Darstellungsraum ein beliebiges Bild beinhaltet.

16. Verfahren nach einem der vorhergehenden Ansprüche, ***dadurch gekennzeichnet, daß*** das Navigieren mittels einer Kameraführung auf einer beliebigen Trajektorie von einem Ausschnitt (1 bis 5) zu einem anderen Ausschnitt (1 bis 5) durchgeführt wird.

17. Verfahren nach Anspruch 16, ***dadurch gekennzeichnet, daß*** eine Richtung einer Kamera an jedem Punkt der Trajektorie frei wählbar ist.

18. Verfahren nach Anspruch 16 oder 17, ***dadurch gekennzeichnet, daß*** eine Verweildauer an einem beliebigen Punkt der Trajektorie frei wählbar ist.

19. Verfahren nach Anspruch 18, ***dadurch gekennzeichnet, daß*** die Verweildauer aus Daten berechnet wird.

20. Verfahren nach einem der vorhergehenden Ansprüche, ***dadurch gekennzeichnet, daß*** die Repräsentanten (7 bis 12) virtuelle und/oder reale Bedienelemente sind.

21. Verfahren nach einem der vorhergehenden Ansprüche, ***dadurch gekennzeichnet, daß*** ein Ausschnitt (1 bis 5) oder mehrere Ausschnitte (1 bis 5) in dem Darstellungsraum **gekennzeichnet** werden und ein anderer Ausschnitt (1 bis 5) oder andere Ausschnitte (1 bis 5) in dem Darstellungsraum durch eine Aktion zu dem oder den **gekennzeichneten** Ausschnitten (1 bis 5) in dem Darstellungsraum bewegt werden.

22. Verfahren nach Anspruch 21, ***dadurch gekennzeichnet, daß*** der oder die **gekennzeichneten** Ausschnitte (1 bis 5) bildschirmfüllend sind.

23. Verfahren nach einem der vorhergehenden Ansprüche, ***dadurch gekennzeichnet, daß*** eine Historie des Navigierens verwendet wird, welche ein Zurück- und Vorwärtsnavigieren ermöglicht.

24. Verfahren nach einem der vorhergehenden Ansprüche, ***dadurch gekennzeichnet, daß*** das Navigieren durch eine Anfrage auf dem World-Wide-Web ausgelöst wird.

## Claims

1. Computer-implemented method for navigating between sections (1 to 5) in a display space, wherein representatives (7 to 12) are provided which are assigned to a particular section (1 to 5) in said display space with the aid of an unambiguous relation, said method comprising the following steps:
selecting at least one representative (7 to12) which is assigned to a particular section (1 to 5) in said display space by means of the unambiguous relation; and
navigating to said particular section (1 to 5) in said display space with the aid of the unambiguous relation with said particular. section (1 to 5) in said display space
***characterized in that***:
said sections (1 to 5) in said display space are each assigned to a particular location of said display space, and a meaningful feedback between a representative (7 to 12) and the section (1 to 5) assigned thereto in said display space is provided upon touching said representative (7 to 12) or said section (1 to 5) assigned thereto.

2. The method according to claim 1, ***characterized in that*** navigating is performed as a continuous fade-out/fade-in change from one section (1 to 5) to another section (1 to 5).

3. The method according to claim 1 or 2, ***characterized in that*** said representatives (7 to 12) have names.

4. The method according to any one of the preceding claims, ***characterized in that*** said representatives (7 to 12) may be associated with images.

5. The method according to any one of the preceding claims, ***characterized in that*** said representatives (7 to 12) are elements of an n^{th}-order fractal-hierarchical network.

6. The method according to any one of the preceding claims, ***characterized in that*** objects represented in said sections (1 to 5) are stored.

7. The method according to claim 6, ***characterized in that*** said objects represented in said sections (1 to 5) are elements of an n^{th}-order fractal-hierarchical network.

8. The method according to any one of the preceding claims, ***characterized in that*** said representatives (7 to 12) differ in shape, color and/or texture and reflect the contents of the respective section (1 to 5) assigned to them.

9. The method according to any one of the preceding claims, ***characterized in that*** navigating is triggered by a user interaction and/or automatically, with automatic triggering being derivable from calculated quantities.

10. The method according to any one of the preceding claims, ***characterized in that*** said display space is of infinite size.

11. The method according to any one of the preceding claims, ***characterized in that*** said display space has any desired dimension.

12. The method according to any one of the preceding claims, ***characterized in that*** said display space is closed.

13. The method according to claim 12, ***characterized in that*** said display space is an ellipsoid or a sphere.

14. The method according to any one of the preceding claims, ***characterized in that*** navigating is triggered by an inquiry on a network.

15. The method according to any one of the preceding claims, ***characterized in that*** said display space includes any desired image.

16. The method according to any one of the preceding claims, ***characterized in that*** navigating is performed with the aid of camerawork on any desired trajectory from one section (1 to 5) to another section (1 to 5).

17. The method according to claim 16, ***characterized in that*** a direction of a camera is freely selectable at any point of said trajectory.

18. The method according to claim 16 or 17, ***characterized in that*** a period of dwelling at any point of said trajectory is freely selectable.

19. The method according to claim 18, ***characterized in that*** said dwelling period is calculated from data.

20. The method according to any one of the preceding claims, ***characterized in that*** said representatives are virtual and/or real operating elements.

21. The method according to any one of the preceding claims, ***characterized in that*** one section (1 to 5) or several sections (1 to 5) in said display space are marked, and another section (1 to 5) or other sections (1 to 5) in said display space are moved by an action to said marked section(s) (1 to 5) in said display space.

22. The method according to claim 21, ***characterized in that*** said marked section(s) (1 to 5) is/are screen-filling.

23. The method according to any one of the preceding claims, ***characterized in that*** a history of navigating is used which allows for backward and forward navigation.

24. The method according to any one of the preceding claims, ***characterized in that*** navigating is triggered through an inquiry on the World-Wide-Web.

## Revendications

1. Procédé mis en oeuvre dans un ordinateur pour naviguer entre des fenêtres (1 à 5) dans un espace d'affichage, moyennant quoi il est prévu des représentants (7 à 12) qui, au moyen d'une relation manifeste, sont affectés chacun à une fenêtre définie (1 à 5) dans l'espace d'affichage, le procédé présentant les étapes suivantes consistant à :
sélectionner au moins un représentant (7 à 12), qui est affecté au moyen d'une relation manifeste à une fenêtre définie (1 à 5 ) dans l'espace d'affichage, et
naviguer vers la fenêtre définie (1 à 5) dans l'espace d'affichage au moyen d'une relation manifeste à la fenêtre définie (1 à 5) dans l'espace d'affichage,
**caractérisé en ce que** :
les fenêtres (1 à 5) dans l'espace d'affichage sont chacune affectées à un lieu défini de l'espace d'affichage et qu'il est prévu un rapport pourvu d'une signification entre un représentant (7 à 12) et la fenêtre qui lui est affectée (1 à 5) dans l'espace d'affichage en cas de contact du représentant (7 à 12) ou de la fenêtre qui lui est affectée (1 à 5).

2. Procédé selon la revendication 1, **caractérisé en ce que** la navigation est réalisée en tant qu'un fondu enchaîné continuel d'une fenêtre (1 à 5) à une autre fenêtre (1 à 5).

3. Procédé selon la revendication 1 ou 2, **caractérisé en ce que** les représentants (7 à 12) comprennent des noms.

4. Procédé selon une des revendications précédentes, **caractérisé en ce que** les représentants (7 à 12) sont associés à des images.

5. Procédé selon une des revendications précédentes, **caractérisé en ce que** les représentants (7 à 12) sont des éléments d'un réseau fractal-hiérarchique de n^{ème} type.

6. Procédé selon une des revendications précédentes, **caractérisé en ce que** des objets affichés dans les fenêtres (1 à 5) seront enregistrés.

7. Procédé selon la revendication 6, **caractérisé en ce que** les objets affichés dans les fenêtres (1 à 5) sont des éléments d'un réseau fractal-hiérarchique de n^{ème} type.

8. Procédé selon une des revendications précédentes, **caractérisé en ce que** les représentants (7 à 12) ont des formes, couleurs et/ou textures différentes et reproduisent le contenu de la fenêtre (1 à 5) qui leur est assignée.

9. Procédé selon une des revendications précédentes, **caractérisé en ce que** la navigation est déclenchée par une interaction d'utilisateur et/ou automatiquement, le déclenchement automatique pouvant découler de grandeurs calculées.

10. Procédé selon une des revendications précédentes, **caractérisé en ce que** l'espace d'affichage est infiniment grand.

11. Procédé selon une des revendications précédentes **caractérisé en ce que** l'espace d'affichage présente une dimension quelconque.

12. Procédé selon une des revendications précédentes, **caractérisé en ce que** l'espace d'affichage est fermé.

13. Procédé selon la revendication 12, **caractérisé en ce que** l'espace d'affichage est un ellipsoïde ou une sphère.

14. Procédé selon une des revendications précédentes, **caractérisé en ce que** la navigation est déclenchée par une demande dans un réseau.

15. Procédé selon une des revendications précédentes, **caractérisé en ce que** l'espace d'affichage comporte une image quelconque.

16. Procédé selon une des revendications précédentes, **caractérisé en ce que** la navigation est exécutée au·moyen du guidage d'une caméra·sur une trajectoire quelconque allant d'une fenêtre (1 à 5) à une autre fenêtre (1 à 5).

17. Procédé selon la revendication 16, **caractérisé en ce qu'**une direction d'une caméra peut être librement sélectionnée en chaque point de la trajectoire.

18. Procédé selon la revendication 16 ou 17, **caractérisé en ce qu'**une durée de pause peut être librement sélectionnée en n'importe quel point de la trajectoire.

19. Procédé selon la revendication 18, **caractérisé en ce que** la durée de pause est calculée à partir de données.

20. Procédé selon une des revendications précédentes, **caractérisé en ce que** les représentants (7 à 12) sont des éléments de commande virtuels et/ou réels.

21. Procédé selon une des revendications précédentes, **caractérisé en ce qu'**une fenêtre (1 à 5) ou plusieurs fenêtres (1 à 5) sont repérées dans l'espace d'affichage et qu'une autre fenêtre (1 à 5) ou d'autres fenêtres (1 à 5) dans l'espace d'affichage sont déplacées par une action dans l'espace d'affichage à la fenêtre repérée ou aux fenêtres repérées (1 à 5).

22. Procédé selon la revendication 21, **caractérisé en ce que** la ou les fenêtres (1 à 5) repérées remplissent tout l'écran.

23. Procédé selon une des revendications précédentes, **caractérisé en ce qu'**est employé un historique de la navigation qui permet une navigation avant et arrière.

24. Procédé selon une des revendications précédentes, **caractérisé en ce que** la navigation est déclenchée par une demande dans le World-Wide-Web.
